# EUROPÄISCHE PATENTSCHRIFT

(11) **EP 1 440 417 B1**
(45) Veröffentlichungstag und Bekanntmachung des Hinweises auf die Patenterteilung: **23.03.2005**
(21) Anmeldenummer: 02776798.7
(22) Anmeldetag: 10.10.2002
(51) Int. Cl.: G06K 13/08

(54) **FÜHRUNGSSCHACHT FÜR EIN CHIPKARTEN-AUFNAHMEAGGREGAT**
GUIDE SHAFT FOR A CHIPCARD HOUSING UNIT
LOGEMENT DE GUIDAGE CON U POUR UNE UNITE RECEPTACLE POUR CARTES A PUCE

(30) Priorität: 02.11.2001 DE 10153996
(43) Veröffentlichungstag der Anmeldung: 28.07.2004
(73) Patentinhaber: SIEMENS AKTIENGESELLSCHAFT, 80333 München (DE)
(72) Erfinder: BOLDT, Matthias, 78467 Konstanz (DE); HUG, Klaus, 78727 Oberndorf (DE)
(86) Internationale Anmeldenummer: PCT/DE2002/003819
(87) Internationale Veröffentlichungsnummer: WO 2003/041007

(56) Entgegenhaltungen:
- EP-A- 0 742 529
- WO-A-00/30016
- FR-A- 2 687 238

## Beschreibung

Die Erfindung betrifft einen Führungsschacht für ein Chipkarten-Aufnahmeaggregat mit einem Kartenhalter, an welchem eine den Chipkarten zugeordnete Auflage sowie Seitenführungen ausgebildet sind und mit Mitteln zum federnden Niederhalten einer Chipkarte auf der Auflage.

Beim Einsatz von Chipkarten in Fahrzeugen besteht milieubedingt ein erhöhtes Risiko von Kontaktunterbrechungen durch Verschmutzungen oder sich aufgrund der unvermeidlichen Erschütterungen bewegenden Chipkarten. Hinzu kommt, dass beispielweise bei der Anwendung von Chipkarten in Fahrtschreibern relativ häufige Eingaben und Entnahmen der Chipkarten aufgrund von Fahrer- und Fahrzeugwechseln sowie Verkehrskontrollen erfolgen und die Chipkarten, die der fahrerbezogenen Speicherung wenigstens der persönlichen Arbeits- und Ruhezeiten dienen, nicht immer mit der erforderlichen Sorgfalt gehandhabt werden und dadurch, aber auch durch Tragen und Aufbewahren der Chipkarten außerhalb eines Fahrzeuges, beschädigt oder verformt sein können. Solche Verformungen von Chipkarten dürfen dann aber nicht dazu führen, dass beim Eingeben einer Chipkarte in das Aufnahmeaggregat die Schreib-/Lesekontakte beschädigt werden oder die Funktion der Chipkarte, wenn diese sich in der Schreib-/Leseposition befindet, gestört ist.

Aus der internationalen Patentanmeldung WO 00/30016, der französischen Offenlegungsschrift FR 2 687 238 und der europäischen Patentanmeldung EP 0 742 529 A2 sind jeweils Führungsschächte für Chipkartenaufnahmegeräte der vorgenannten Art bekannt, die elastische Mittel zum Niederhalten der eingegebenen Chipkarte nutzen. Damit auch stark verformte Chipkarten die erforderliche Eormkorrektur zum Auslesen unter elastischer Verformung der aufgegebenen Karte erfahren, ist bei diesen Anordnungen stets eine hohe Federkraft vorzusehen, welche im Rahmen einer jeden Chipkarten-Eingabe entsprechend zu überwinden ist. Dies hat einerseits die Notwendigkeit der Verwendung äußerst starker Federelemente zur Folge und andererseits einen hohen Verschleiß der Chipkarte in den Bereichen, in welchen die elastischen Elemente zum Niederhalten über die Oberflächen gleiten. Bei weniger stark ausgeführter Federkraft der Niederhalteelemente ist die sichere Kontaktierung in Ermangelung korrekter Ausrichtung der Chipkarte gefährdet.

Aufgabe der vorliegenden Erfindung war es demnach, den Führungsschacht eines Chipkarten-Aufnahmeaggregates unter Beachtung von Serientauglichkeit bezüglich der Montage und einem vergleichsweise geringen Herstellaufwand der Bauteile derart auszubilden, dass verformte Chipkarten ohne ungebührlich hohem Verschleiß eingebbar sind und eine sichere Kontaktierung auch in einem extrem rauen Anwendungsmilieu gewährleistet ist.

Die Lösung der gestellten Aufgabe ist dadurch gekennzeichnet, dass die Mittel zum Niederhalten im Bereich des Endes des Führungsschachtes einen im Wesentlichen der Dicke einer Chipkarte entsprechenden Spalt zum starren Niederhalten zwischen sich und der Auflage bilden und eine an dem Kartenhalter gefedert gelagerte Zunge vorsehen derart, dass die Zunge gegen den Eingang des Führungsschachtes weist und federnd auf einer sich in der Schreib-/Leseposition befindlichen.Chipkarte aufliegt.

Vorzugsweise sieht die Lösung der Aufgabe vor, dass ein einziges, federungsfähiges Halteteil vorgesehen ist, an welchem einerseits die Zunge anderseits eine in Bezug zur Auflage spaltbildende Struktur ausgebildet sind und dass das Halteteil auf dem Kartenhalter befestigt ist.

Ein bevorzugtes Ausführungsbeispiel besteht darin, dass das Halteteil im wesentlichen als Blattfeder ausgebildet ist und dass an dem der Zunge abgewandten Ende des Halteteils mit dem Kartenhalter zusammenfügbare Stützschenkel angeformt sind und dass ferner dem Kartenhalter quer zur Bewegungsrichtung der Chipkarten ein Joch zugeordnet ist und dass das Halteteil, indem es sich einerseits an dem Joch anderseits mittels der Zunge und den Stützschenkeln auf der Auflage bzw. auf diese seitlich begrenzenden Seitenführungen des Kartenhalters unter Vorspannung abstützt, auf dem Kartenhalter befestigt ist.

Der Vorteil den die Erfindung bietet ist insbesondere darin zu sehen, dass nicht nur ein für eine zuverlässige Kontaktierung erforderliches Niederhalten und Ebenrichten verformter Chipkarten wenigstens im Schreib-/Lesebereich, sondern zusätzlich ein schwingungssicheres Festhalten einer in dem Führungsschacht befindlichen Chipkarte erfolgt. Außerdem dient das Chipkarten wenigstens im Schreib-/Lesebereich, sondern zusätzlich ein schwingungssicheres Festhalten einer in dem Führungsschacht befindlichen Chipkarte erfolgt. Außerdem dient das erfindungsgemäße Halteteil bzw. die daran ausgebildete Zunge als Schmutzabweiser und in gewisser Weise als Dichtung. Ferner bietet sie einen Handhabungswiderstand beim Eingeben einer Chipkarte, was insbesondere wenn eine Chipkarte "blind" eingegeben wird, für den Benutzer eine zweifelsfreie Rückmeldung darüber bietet, dass sich die Chipkarte in dem Führungsschacht befindet. Erwähnenswert ist ferner, dass der erfindungsgemäße Führungsschacht mit einem Minimum an Bauteilen realisierbar und lediglich mittels Fügeverbindungen relativ schnell und leicht montierbar ist. Vorteilhaft ist außerdem, dass die Bauhöhe des Führungsschachtes trotz der Niederhaltefunktion gering und ein mit dem erfindungsgemäßen Führungsschacht ausgerüstetes Chipkarten-Aufnahmeaggregat in dieser Funktion autark und somit eine allgemeine Verwendbarkeit gegeben ist.

In folgenden sei das bevorzugte Ausführungsbeispiel der Erfindung anhand von Zeichnungen näher erläutert:

Es zeigen:
- Figur 1: eine perspektivische Draufsicht eines Chipkarten-Aufnahmeaggregates,
- Figur 2: einen Schnitt gemäß der Schnittlinie A in Figur 1.

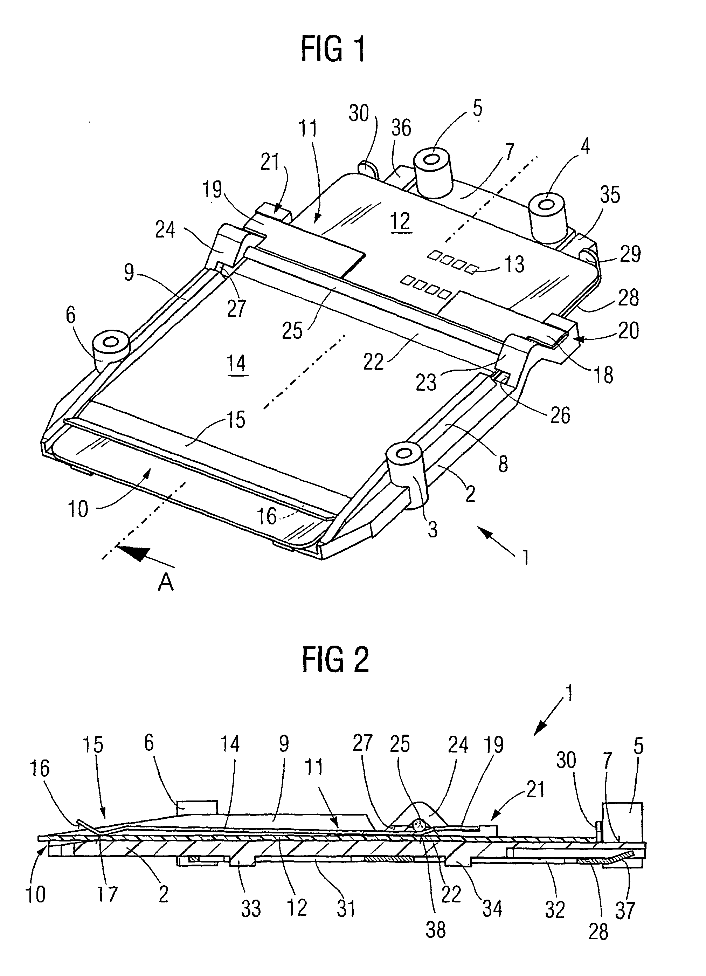

Das mit der Figur 1 dargestellte Chipkarten-Aufnahmeaggregat 1 weist einen Kartenhalter 2 auf, an welchem Gewindebolzen 3, 4, 5 und 6 zur Befestigung des Chipkarten-Aufnahmeaggregates 1, beispielsweise an einer Leiterplatte eines Gerätes, angeformt sind. Mit 7 ist eine Auflage, mit 8 und 9 sind an dem Kartenhalter 2 ausgebildete Seitenführungen des Führungsschachtes 10 bezeichnet. Ein mit 11 bezeichnetes, als federungsfähiger, zweiarmiger Hebel ausgebildetes Halteteil, welches in einer einfachen, im folgenden noch zu beschreibenden Weise an dem Kartenhalter 2 befestigt ist und als Niederhalter dient vervollständigt den Führungsschacht 10.

Die Figuren 1 und 2 zeigen das Chipkarten-Aufnahmeaggregat 1 in einem Zustand, in dem sich eine Chipkarte 12 in der Schreib-/Leseposition befindet. In dieser Position liegt die Chipkarte 12, was nicht dargestellt ist, entweder an einem an dem Kartenhalter 2 oder an einem an dem den Chipkartenkontakten - ein Kontakt ist mit 13 bezeichnet - zugeordneten Kontaktsatz ausgebildeten Anschlag an. Der Kontaktsatz ist vorzugsweise an der bereits erwähnten, nicht dargestellten Leiterplatte angebracht. Es ist aber auch denkbar, dass der Kontaktsatz an einer an dem Kartenhalter 2 ausgebildeten Brücke befestigt ist, womit das Chipkarten-Aufnahmeaggregat 1 als eine unabhängig von Einbaugegebenheiten funktionsfähige Baugruppe ausgebildet wäre.

Wie aus der Figur 1 ferner ersichtlich ist, liegt in der Schreib-/Leseposition der Chipkarte 12 eine an dem im wesentlichen eine Blattfeder darstellenden Halteteil 11 ausgebildete, der Breite der Auflage entsprechende, federnde Zunge 14 unmittelbar auf der Chipkarte 12 auf. Dabei weist die Zunge 14 gegen den Eingang des Führungsschachtes 10. Stirnseitig ist an der Zunge 14 eine v-förmige Profilleiste 15 ausgebildet, die einerseits eine Leitfläche 16 anderseits eine Abstreifkante 17 bietet. An dem der Zunge 14 abgewandten Ende des Halteteils 11 sind Stützschenkel 18 und 19 ausgebildet, denen an den Seitenführungen 8, 9 des Kartenhalters 2 ausgeformte Fassungen 20 und 21 zugeordnet sind. Gegenüber der Zunge 14 sind die Stützschenkel 18, 19 abgewinkelt ausgebildet, und zwar in die der Abstreifkante 17 entgegengesetzte Richtung. Die dadurch zwischen der Zunge 14 und den Stützschenkeln 18, 19 gegebene Stufenwand ist mit 22 bezeichnet.

Mit 23 und 24 sind an dem Kartenhalter 2 beiderseits der Auflage 7, sich gegenüberliegend angeformte Lagerschenkel bezeichnet, die der Aufnahme einer Stange 25 dienen. In den Lagerschenkeln 23, 24 sind bei dem gewählten Ausführungsbeispiel nicht näher bezeichnete Lagerschalen ausgebildet, die durch in Richtung des Eingangs des Führungsschachtes 10 in den Lagerschenkeln 23, 24 ausgebildete Schlitze 26 und 27 zugänglich sind. Diese Lösung ermöglicht eine sehr einfache Montage und eine selbstsichernde Befestigung des Halteteils 11, in dem das Halteteil 11 auf den Kartenhalter 2 aufgelegt und die Stange 25 seitlich, d.h. in Eingaberichtung der Chipkarten, in die Lagerschenkel 23, 24 eingeschoben wird und unter der Wirkung des federnden Halteteils 11 in die Lagerschalen einschnappt. Mit anderen Worten, das Halteteil 11 stützt sich nach dem Montieren der Stange 25 unter Vorspannung einerseits mittels der Zunge 14 anderseits mittels den Stützschenkeln 18, 19 auf den Kartenhalter 2 ab. Die Fassungen 20, 21 und die Stufenwand 22 dienen der Sicherung des Halteteils 11 gegen Verschieben beim Ein- und Ausgeben einer Chipkarte 12.

An der dem Führungsschacht 10 entgegengesetzten Seite des Kartenhalters 2 ist ein mit 28 bezeichneter Schlitten verschiebbar gelagert. Dieser greift mittels zweier Mitnehmer 29 und 30 in den Bewegungsweg der Chipkarte 12 ein. Zur Lagerung des Schlittens 28 dienen zwei bajonettartig montierbare Fügeverbindungen, d.h. in dem Schlitten 28 sind schlüssellochartige Öffnungen 31 und 32 vorgesehen und an dem Kartenhalter 2 sind T-förmig ausgebildete Lagerzapfen 33 und 34 angeformt. Mit 35 und 36 sind an dem Kartenhalter 2 ausgebildete Riegel bezeichnet, die der Sicherung des Schlittens 28 in dessen Verschiebeebene dienen. Ein mit 37 bezeichneter, an dem Schlitten 28 mittig ausgebildeter Fortsatz dient im Falle des Ausgebens der Chipkarte 12 dem Zusammenwirken des Schlittens 28 mit einem motorisch betätigten Stößsel.

Wie insbesondere aus der Figur 2 hervorgeht besteht infolge des Abwinkelns der Stützschenkel 18, 19 zwischen der Zunge 14 und der Stufenwand 22 des Halteteils 11 ein Knick, welcher bei entsprechender masslicher Abstimmung der Lagerschenkel 23, 24 und der darin ausgebildeten Lagerschalen sowie der Stange 25 als Richtkante 38 wirksam ist, mit anderen Worten, zwischen der Richtkante 38 und der Auflage 7 ist lediglich ein der Dicke der Chipkarte 12 entsprechender Spalt gegeben, der aufgrund der unmittelbaren Zuordnung der sozusagen als Joch dienenden Stange 25 ein absolut starres Niedernhalten einer nicht ebenen Chipkarte 12 bietet.

Der Vollständigkeit halber sei noch erwähnt, das der lösungsgemäße Führungsschacht auch realisierbar ist, wenn bei dem betreffenden Chipkarten-Aufnahmeaggregat Mittel zum Verriegeln der Eingabeöffnung und / oder Mittel zum selbsttätigen Einziehen der Chipkarten über eine kurze Distanz vorgesehen sind, wobei letztere Mittel beispielweise eine durch eine Öffnung in der Zunge 14 auf die Auflage 7 durchgreifende Transportwalze vorsehen können. Ferner ist es denkbar das Halteteil 11 derart auszubilden, dass die Stützschenkel 18, 19 das Kontaktfeld 13 gabelförmig umgreifen und entweder auf einer eingegebene Chipkarte federnd aufliegen oder aufgrund der Steifigkeit des gegenüber der Zunge 14 kürzeren Hebelarmes lediglich spaltbildend wirksam sind. Letztere Funktion ist im übrigen dann erforderlich, wenn beispielweise unter Einsparung der Stange 25 das Haltteil 11 unmittelbar an am Kartenhalter 2 angeformten Stehbolzen durch Anschrauben oder Aufrasten befestigt wird.

## Patentansprüche

1. Führungsschacht für ein Chipkarten-Aufnahmeaggregat mit
einem Kartenhalter, an welchem eine den Chipkarten zugeordnete Auflage sowie Seitenführungen ausgebildet sind und mit Mitteln zum federnden Niederhalten einer Chipkarte auf der Auflage,
**dadurch gekennzeichnet,**
**dass** die Mittel zum Niederhalten im Bereich des Endes des Führungsschachtes (10) einen im Wesentlichen der Dicke einer Chipkarte (12) entsprechenden Spalt zum starren Niederhalten zwischen sich und der Auflage (7) bilden und eine an dem Kartenhalter (2) gefedert gelagerte Zunge (14) vorsehen derart, dass die Zunge (14) gegen den Eingang des Führungsschachtes (10) weist und federnd auf einer sich in der Schreib-/Leseposition befindlichen Chipkarte (12) aufliegt.

2. Führungsschacht nach Anspruch 1,
**dadurch gekennzeichnet,**
**dass** ein einziges, federungsfähiges Halteteil (11) vorgesehen ist, an welchem einerseits die Zunge (14) anderseits eine in Bezug zur Auflage (7) spaltbildende Struktur ausgebildet sind und dass das Halteteil (11) auf dem Kartenhalter (2) befestigt ist.

3. Führungsschacht nach Anspruch 1,
**dadurch gekennzeichnet,**
**dass** das Halteteil (11) als zweiarmiger Hebel ausgebildet und ungleichseitig gelagert ist.

4. Führungsschacht nach Anspruch 1,
**dadurch gekennzeichnet,**
**dass** die Breite der Zunge (14) im wesentlichen der Breite der Auflage (7) entspricht und dass an der Zunge (14) stirnseitig eine Leitfläche (16) ausgebildet ist.

5. Führungsschacht nach Anspruch 1,
**dadurch gekennzeichnet,**
**dass** das Halteteil (11) im wesentlichen als Blattfeder ausgebildet ist und dass an dem der Zunge (14) abgewandten Ende des Halteteils (11) mit dem Kartenhalter (2) zusammenfügbare Stützschenkel (18, 19)angeformt sind.

6. Führungsschacht nach Anspruch 2,
**dadurch gekennzeichnet,**
**dass** dem Kartenhalter (2) quer zur Bewegungsrichtung der Chipkarten (12) ein Joch zugeordnet ist und dass das Halteteil (11), indem es sich einerseits an dem Joch anderseits mittels der Zunge (14) und den Stützschenkeln (18, 19) auf der Auflage (7) bzw. auf diese seitlich begrenzenden Seitenführungen (8, 9) des Kartenhalters (2) unter Vorspannung abstützt, auf dem Kartenhalter (2) befestigt ist.

7. Führungsschacht nach Anspruch 6,
**dadurch gekennzeichnet,**
**dass** an dem Kartenhalter (2) beiderseits der Auflage (7) sich gegenüberliegende Lagerschenkel (23, 24) angeformt sind und dass eine als Joch dienende Stange (25) den Lagerschenkeln (23, 24) zugeordnet ist.

8. Führungsschacht nach Anspruch 7,
**dadurch gekennzeichnet,**
**dass** in den Lagerschenkeln (23, 24) vorzugsweise in Bewegungsrichtung der Chipkarten (12) zugängliche Lagerschalen ausgebildet sind, welche im Zusammenwirken mit dem Halteteil (11) eine Schnappbefestigung der Stange (25) gestatten.

9. Führungsschacht nach Anspruch 6,
**dadurch gekennzeichnet,**
**dass** die Stützschenkel (18, 19) beiderseits des Kontaktfeldes (13) einer in der Schreib-/Leseposition befindlichen Chipkarte(12) mittels stirnseitig angeformter Gleitschuhe einen die Chipkarte (12) führenden Spalt bilden.

10. Führungsschacht nach Anspruch 2,
**dadurch gekennzeichnet,**
**dass** an dem Kartenhalter (2) Stehbolzen ausgebildet sind und dass an dem Halteteil (11) den Stehbolzen zugeordnete Öffnungen derart vorgesehen sind, dass das Halteteil (11) durch Aufstecken auf die Stehbolzen unmittelbar an dem Kartenhalter (2) befestigbar ist.

## Claims

1. Guide shaft for a chip card holding assembly having a card holder on which a support which is assigned to the chip cards and side guides are formed, and having means for holding down in a sprung fashion a chip card on the support, **characterized in that** the holding down means form, in the region of the end of the guide shaft (10), a gap, for rigidly holding down, corresponding essentially to the thickness of a chip card (12), between themselves and the support (7), and provide a tongue (14) which is spring-mounted on the card holder (2) in such a way that the tongue (14) points toward the entrance of the guide shaft (10) and rests in a sprung fashion on a chip card (12) which is located in the write/read position.

2. Guide shaft according to Claim 1, **characterized in that** a single holding part (11) which is capable of spring deflection is provided, on which holding part (11) on the one hand the tongue (14) and on the other hand a structure which forms a gap with respect to the support (7) are formed, and **in that** the holding part (11) is mounted on the card holder (2).

3. Guide shaft according to Claim 1, **characterized in that** the holding part (11) is formed as a two-armed lever and is mounted in a scalene fashion.

4. Guide shaft according to Claim 1, **characterized in that** the width of the tongue (14) corresponds essentially to the width of the support (7), and **in that** a guide face (16) is formed on the end face of the tongue (14).

5. Guide shaft according to Claim 1, **characterized in that** the holding part (11) is formed essentially as a leaf spring, and **in that** supporting limbs (18, 19) which can be combined with the card holder (2) are formed onto the end of the holding part (11) which faces away from the tongue (14).

6. Guide shaft according to Claim 2, **characterized in that** a yoke is assigned to the card holder (2) transversely to the direction of movement of the chip cards (12), and **in that** the holding part (11) is attached to the card holder (2) **in that** it is supported - with prestress - on the one hand on the yoke and on the other hand, by means of the tongue (14) and the supporting limbs (18, 19), on the support (7) or on lateral guides (8, 9) - bounding the latter laterally - of the card holder (2).

7. Guide shaft according to Claim 6, **characterized in that** bearing limbs (23, 24) which face one another are formed onto the card holder (2) on each side of the support (7), and **in that** a rod (25) which serves as a yoke is assigned to the bearing limbs (23, 24).

8. Guide shaft according to Claim 7, **characterized in that** accessible bearing shells, which permit a snap-in attachment of rod (25) by interacting with the holding part (11), are formed in the bearing limbs (23, 24), preferably in the direction of movement of the chip cards (12).

9. Guide shaft according to Claim 6, **characterized in that**, on both sides of the contact field (13) of a chip card (12) which is located in the write/read position, the supporting limbs (18, 19) form, by means of sliding shoes formed onto the end side, a gap which guides the chip card (12).

10. Guide shaft according to Claim 2, **characterized in that** stud bolts are formed on the card holder (2), and **in that** openings which are assigned to the stud bolts are provided on the holding part (11) in such a way that the holding part (11) can be attached directly to the card holder (2) by plugging onto the stud bolts.

## Revendications

1. Gaine d'introduction destinée à un réceptacle pour cartes à puce comportant un porte-carte, sur laquelle sont montés une pièce d'appui affectée aux cartes à puce, ainsi que des guides latéraux, et comportant des moyens destinés à maintenir une carte à puce appliquée d'une façon élastique sur la pièce d'appui,
**caractérisée par le fait**
**que** les moyens destinés à appuyer sur la carte forment, dans la zone de l'extrémité de la gaine d'introduction (10), une fente correspondant essentiellement à l'épaisseur d'une carte à puce (12) et destinée à maintenir la carte appliquée rigidement entre ces moyens et la pièce d'appui (7) et qu'il est prévu une languette (14) montée d'une façon élastique sur le porte-carte (2) de telle manière que la languette (14) soit dirigée vers l'entrée de la gaine d'introduction (10) et s'applique en faisant ressort sur une carte à puce (12) qui se trouve dans la position d'écriture et lecture.

2. Gaine d'introduction selon la revendication 1
**caractérisée par le fait**
**qu'**il est prévu une seule pièce de maintien (11) élastique sur laquelle sont prévues, d'une part, la languette (14), d'autre part, une structure formant une fente par rapport à la pièce d'appui (7) et que la pièce de maintien (11) est fixée sur le porte-carte (2).

3. Gaine d'introduction selon la revendication 1
**caractérisée par le fait**
**que** la pièce de maintien (11) est conçue comme levier à deux bras et est montée à côtés inégaux.

4. Gaine d'introduction selon la revendication 1
**caractérisée par le fait**
**que** la largeur de la languette (14) correspond, pour l'essentiel, à la largeur de la pièce d'appui (7) et qu'une surface de guidage (16) est formée vers l'avant sur la languette (14).

5. Gaine d'introduction selon la revendication 1
**caractérisée par le fait**
**que** la pièce de maintien (11) est conçue, pour l'essentiel, comme ressort à lame et que, s ur l'extrémité d e la pièce de maintien (11) opposée à la languette (14), sont formés des bras d'appui (18, 19) qui peuvent être assemblés avec le porte-carte (2).

6. Gaine d'introduction selon la revendication 2
**caractérisée par le fait**
**qu'**un joug est affecté au porte-carte (2) perpendiculairement à la direction du déplacement des cartes à puce (12) et que la pièce de maintien (11) est fixée sur le porte-carte (2), en s'appuyant, sous précontrainte, d'une part, sur le joug, d'autre part, au moyen de la languette (14) et des bras d'appui (18, 19), sur la pièce d'appui (7) et, respectivement, sur des guides latéraux (8, 9) du porte-carte (2), qui la limitent latéralement.

7. Gaine d'introduction selon la revendication 6
**caractérisée par le fait**
**que** des bras de fixation (23, 24) se faisant face sont prévus sur le porte-carte (2) des deux côtés de la pièce d'appui (7) et qu'une barrette (25) servant de joug est affectée aux bras de fixation (23, 24).

8. Gaine d'introduction selon la revendication 7
**caractérisée par le fait**
**que**, dans les bras de fixation (23, 24), sont formées des coupelles de support, accessibles d e préférence dans le sens du d éplacement d es cartes à puce (12), coupelles de support qui permettent, en interaction avec la pièce de maintien (11), une fixation par encliquetage de la barrette (25).

9. Gaine d'introduction selon la revendication 6
**caractérisée par le fait**
**que** les bras d'appui (18, 19) des deux côtés du champ de contacts (13) d'une carte à puce (12) se trouvant dans la position d'écriture et lecture, forment, au moyen de patins de guidage formés du côté avant, une fente guidant la carte à puce (12).

10. Gaine d'introduction selon la revendication 2
**caractérisée par le fait**
**que** des boulons d'entretoisement sont prévus sur le porte-carte (2) et que, sur la pièce de maintien (11), des ouvertures affectées aux boulons d'entretoisement sont prévues de telle sorte que la pièce de maintien (11) peut être fixée directement sur le porte-carte (2) en l'engageant sur les boulons d'entretoisement.
